# EUROPEAN PATENT APPLICATION

(11) **EP 1 609 724 A1**
(43) Date of publication of application: **28.12.2005**
(21) Application number: 04721549.6
(22) Date of filing: 18.03.2004
(51) Int. Cl.: B65D 1/16, C12H 1/22

(54) **STAINLESS STEEL AGEING BARREL**

(30) Priority: 18.03.2003 ES 200300692
(71) Applicant: Indem S.L., 26300 Najera (ES)
(72) Inventor: IBANEZ MORGA, Milagros, (ES)
(74) Representative: Botella Reyna, Antonio
(86) International application number: PCT/ES2004/000130
(87) International publication number: WO 2004/083053

(57) **Abstract**

**SUMMARY.**

Stainless steel barrel for aging, of the type made up of a closed container which includes an outlet bottom plug and/or collection of samples and an upper plug for filling which consists of a cylindrical-shaped container which curves out at the centre, with locks or flat end bottoms. In its interior it is provided some supports for a plurality of wood boards which make their contribution to the liquid contained in the barrel. The barrel incorporates a water tight lock that allows access to the interior for introducing and/or substituting the wood boards or for other operations.

## Description

### OBJECT OF INVENTION.

The present invention refers to a stainless steel barrel for the aging of wines, liquors, vinegars and the like.

### BACKGROUND OF THE INVENTION.

At present the aging of wines, liquors and the like is carried out by using wood barrels in which the liquid sets absorbing contributions from the wood.

However, these wood barrels present problems of reliability and hygiene, problems which will not exist with the use of barrels made of stainless steel or other more hygienic materials which frequently are not used because they do not provide the contributions to the liquid that the wood barrels provide.

Therefore, we have sanitation and reliability problem with the wood barrels and a problem with contributions in the barrels made of more hygienic materials such as stainless steel.

### DESCRIPTION OF THE INVENTION.

The barrel of the present invention has an optimal structure for solving the problems described above, since it combines the reliability and hygiene of the metal barrels with the contributions of the wood barrels.

According to the invention, the barrel is made up of a cylindrical-shaped container which curves out at the centre, of stainless steel or a material of assimilable sanitary characteristics, such as aluminium, methacrylate, polyester, etc. The embodiment in stainless steel is carried out preferably with laminated sheet cut by laser, water jet, etc., with the sheets welded by TIG or any other method, with or without addition of material.

The barrel has an outlet lower plug and the collection of samples on one of its bottoms and another one above for filling, as well as a water tight hatch lock in the interior for the replacement of internal elements.

In the interior of the barrel there are some supports for wood boards of the type usable for transmitting their properties to the liquid, thereby providing the wood boards necessary to achieve a contact surface with the liquid equivalent or superior to that of a conventional wood barrel of similar capacity. Obviously, the placement of the wood boards is carried out through the lock hatch, and in such a way so as not to create separate chambers, this is done in such a way that the liquid content may flow freely when it is introduced or removed from the barrel, and may be achieved through the positioning of the wood boards and/or through perforations or cuts in the wood boards.

Taking into consideration the facility for priming offered by this type of stainless material (and others), it can be lacquered and be submitted to processes that simulate wood or even other types of materials or decorations. As a decorative accessory and/or reinforcement, the barrel is ornamented with rings either engraved, polished or marked in relief, etc., or they can even have separate rings made out of rubber, wood, steel, etc.

### BRIEF DESCRIPTION OF THE DRAWINGS.

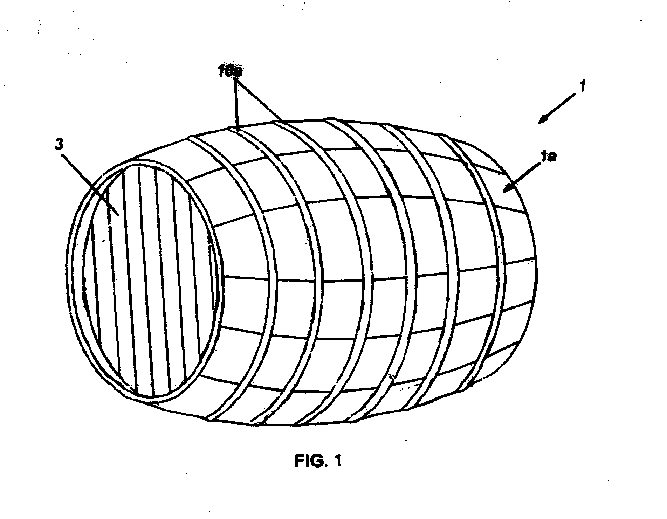

Figure 1 simply shows a rear view of the barrel of the invention.

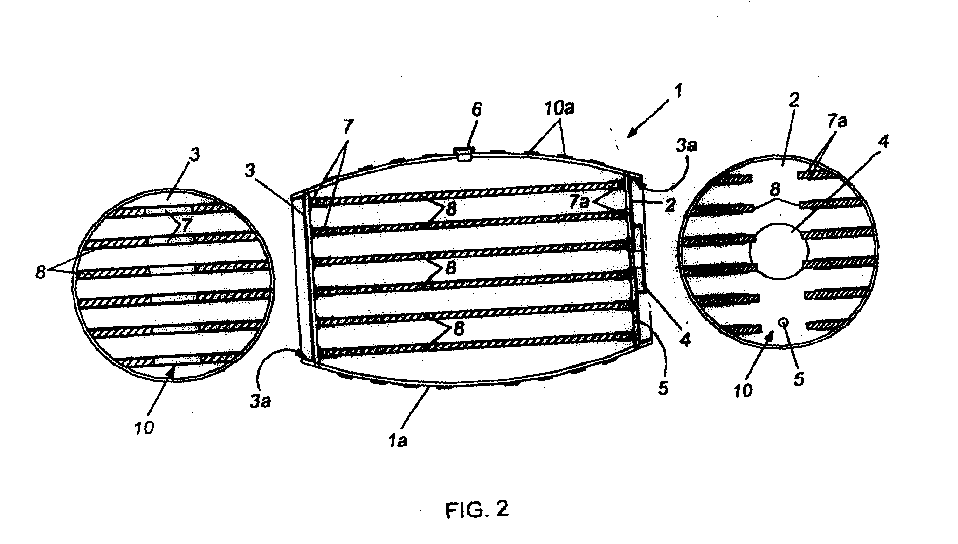

Figure 2 shows a longitudinal section and two opposite transversal sections of the barrel of the invention.

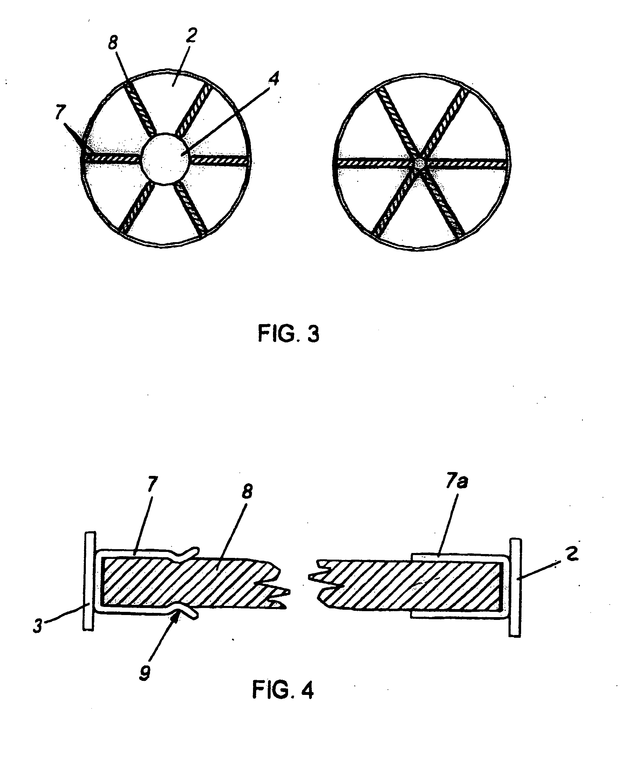

Figure 3 shows a transversal section of an alternative embodiment for the barrel of the invention.
Figure 4 shows a detail of the fixation profiles for fastening of the internal wood boards of the barrel of the invention.

### DESCRIPTION OF A PRACTICAL EMBODIMENT of THE INVENTION.

The barrel 1 of the invention is made up of a cylindrical-shaped receptacle which curves out at the centre, with two bottoms 2, 3, and which is made up of one or several ferrules of laminated stainless steel sheet cut by laser and welded by TIG. The bottoms have a folded rim or soldering 3a for fixation to the ferrules and to reinforce this area for giving increased strength during handling of the barrels in storage areas, loading or unloading, or in cleaning operations. The ferrules themselves can also incorporate these rims to be welded to the bottoms.

One of the bottoms 2 has a water tight hatch 4 for internal access, as well as a water tight plug 5 for the outlet of liquid or the collection of samples, the other bottom 3 having no opening.

The hatch 4 is made of steel, wood, methacrylate or the like, with water tight joints, not shown, made of silicon, cardboard or any other type.

The barrel also incorporates an upper water tight plug 6 for filling.

Inwardly the barrel welds in its bottom some profile 7, 7a pairs facing each other, in U section, where some wood boards 8 are fixed by their edges. One of the profiles 7a of each pair incorporates a narrowing 9 of its branches that immobilises the corresponding wood board 8 in order to avoid its accidental fall.

The design of the barrel allows the changing of the wood boards 8 for their cleaning as well as for their substitution if the type of wood is changed, or in the case of wear derived from cleaning, having access through the hatch 4 for this purpose. The wood boards allow free spaces 10 for the free circulation of the liquid during filling and/or emptying of the barrel.

The barrel outwardly incorporates some rings 10a similar to those of the traditional barrels, engraved or marked, that simulate the reinforcements of the traditional wood barrels, which together with the possibility of imprinting and painting of the steel, serve to offer the look of a traditional barrel, along with the sanitary conditions of stainless steel.

## Claims

1. Stainless steel barrel for aging, of the type consisting of a closed container which incorporates an outlet bottom plug and/or the collection of samples and an upper plug for filling; **characterized in that** it is made up of a cylindrical-shaped container that is outwardly curved at its centre, with locks or extreme bottoms which are flat; some supports are provided inside for a plurality of wood boards which provide their contributions to the liquid content of the barrel. The barrel incorporates a water tight lock used for accessing the interior in order to introduce and/or substitute the wood boards or to perform other operations.

2. Barrel according to claim 1, **characterised in that** the supports are made up of pairs of profiles facing each other in U section, which receive opposite edges of the wood boards.

3. Barrel according to Claim 2, **characterised in that** at least one of the profiles in U section of each pair has in its branches a narrowing for immobilising the wood boards.

4. Barrel according to Claim 3, **characterised in that** the wood boards are supported in a longitudinal direction.

5. Barrel according to Claim 1, **characterised in that** the practicable lock is provided in one of its bottoms.
